# EUROPEAN PATENT SPECIFICATION

(11) **EP 3 401 940 B1**
(45) Date of publication and mention of the grant of the patent: **23.06.2021**
(21) Application number: 17305521.1
(22) Date of filing: 09.05.2017
(51) Int. Cl.: H01H 39/00, B23D 15/14, F15B 15/19

(54) **PYROTECHNIC CIRCUIT BREAKER**
PYROTECHNISCHER SCHUTZSCHALTER
COUPE-CIRCUIT PYROTECHNIQUE

(43) Date of publication of application: 14.11.2018
(73) Proprietor: ArianeGroup SAS, 75015 Paris (FR)
(72) Inventor: MARLIN, Frédéric, 33160 SAINT MEDARD EN JALLES (FR); NADEAU, Jean-Paul, 83190 OLLIOULES (FR); LORENZON, Romain, 33320 EYSINES (FR)
(74) Representative: Cabinet Beau de Loménie

(56) References cited:
- EP-A1- 2 787 521
- WO-A1-2016/038044
- US-A1- 2015 200 065
- US-A1- 2016 293 362

## Description

### BACKGROUND OF THE INVENTION

The present invention relates to the field of pyrotechnic circuit breakers.

Pyrotechnic circuit breakers are widely used for disabling an electric circuit, for instance in response to abnormal conditions of use. Conventional pyrotechnic circuit breakers use a bus bar acting as a conducting element, which can be cut or broken along its transverse direction into two distinct portions by a piston in order to open the circuit by stopping the electric conduction between the two parts of the bus bar. In the present text, we will refer to the cutting of the bus bar by the piston, to designate either its cutting or its breaking by the piston. Documents WO 2016/038043, WO 2016/038044 and WO 2016/038050 disclose known pyrotechnic circuit breakers. US 2015/200065 discloses a short-circuit shutdown switch according to the preamble of claim 1, US 2016/293362 discloses a breaker and EP 2 787 521 discloses a cutting device.

When the piston is propelled by the pyrotechnic igniter, the impact of the piston on the bus bar may impart a movement of rotation of the piston around its axis of displacement. In addition, when the material of the bus bar is soft or the bus bar is thin, the piston may bend the bus bar and cut it improperly. As a consequence, the reliability of the circuit breaker is reduced.

Thus, there is still a need for a pyrotechnic circuit breaker which is more reliable.

### SUMMARY OF THE INVENTION

The present invention aims at providing an improved actuator for responding to the above-mentioned technical issues. It is an object of the present invention to provide a pyrotechnic circuit breaker according to claim 1.

In the first position, the first protrusion of the piston is first separated from the bus bar, at a predetermined distance (different from zero) thereof. Upon activation of the pyrotechnic igniter, the piston quickly starts moving from the first position to the second position. In an intermediate position between the first and second positions, the second protrusion of the piston is engaged in the aperture of the bus bar, while the cutting edge is not yet in contact with the bus bar (because the second protrusion extends from the lower face of the piston over a greater distance than the first protrusion). Then, as the piston keeps moving, the cutting edge comes into contact with the bus bar to break it into two distinct parts, thereby stopping the electrical conductivity of the bus bar. During the cutting of the bus bar, the second protrusion is engaged in the aperture to prevent the piston from rotating. Therefore, when the cutting edge cuts the bus bar, the piston is guided and cannot rotate anymore.

It should be understood that the second protrusion is engaged at the beginning of the cutting of the bus bar until the bus bar is effectively cut, which generally occurs before the piston reaches the second or lowered position. When the piston is in the second position, the second protrusion is engaged in what remains of the aperture in both cut portions of the bus bar.

With such an arrangement, the piston is prevented from rotating when the cutting edge starts cutting the bus bar, and the cutting of the bus bar is more accurate. Thus, the pyrotechnic circuit breaker according to the invention is more reliable.

Another advantage of the pyrotechnic circuit breaker of the present invention is that the bus bar is also maintained in position during the cutting step (in particular it cannot move in the second direction), because the second protrusion engages the aperture and both cooperate. It should be understood that the second protrusion and the aperture may have complementary shapes (i.e. substantially the same shape), or different shapes, as long as the second protrusion is able to cooperate with the aperture to obtain the above mentioned technical effects.

The body and the piston may be made from an electrically insulating material. According to an embodiment, the piston is of cylindrical shape, and can further comprise a peripheral recess in which a sealing gasket is maintained.

According to an embodiment, the pyrotechnic circuit breaker further comprises a drawer supporting the bus bar and comprising two slots aligned along the first direction with the apertures in the bus bar, the second and third protrusions being engaged in said slots when the piston is in the second position. Said drawer can be inserted in a housing extending in the second direction within the body. With such an arrangement, after the bus bar is being cut, the second protrusion in the piston goes through the bus bar and is engaged immediately after in the slot of the drawer. Thus, the bus bar is maintained in position during a longer time and until it is entirely cut, and the piston is guided during a longer time until it reaches the second position.

According to an embodiment, the drawer further comprises a receiving groove on a face of the drawer supporting the bus bar, said receiving groove being configured to cooperate with the first protrusion of the piston and to receive one of the distinct portions of the bus bar once it is cut. With such an arrangement, as the bus bar is firmly maintained by the second protrusion of the piston during its cutting (in particular, the bus bar cannot move in the second direction with respect to the piston and the drawer), the first protrusion comprising the cutting edge cooperates with the receiving groove of the drawer so they can act together like scissors to cut the bus bar. Thus, this arrangement further improves the cutting of the bus bar.

According to an embodiment, the second and third protrusions and the apertures in the bus bar have an elongated shape in the second direction. With such an arrangement, the effects of the apertures on the electrical conduction properties of the bus bar are reduced. Indeed, with an elongated shape in the second direction (i.e. in the direction in which the bus bar extends), the section of the bus bar is less reduced than when the apertures extend in a direction transverse to the second direction.

The piston further comprises a third protrusion extending from the lower face thereof and the bus bar comprises two apertures adapted to cooperate with the second and third protrusions of the piston. The second and third protrusions may be positioned symmetrically with respect to a longitudinal axis of the pyrotechnic circuit breaker (such a longitudinal axis may be parallel to the first direction and centered on the piston). It should be understood that the piston may comprise more than two protrusions for guiding the piston (i.e. more than the second and the third protrusions), and the bus bar may comprise as many corresponding apertures.

According to an embodiment, the apertures in the bus bar present chamfered edges. Additionally or alternatively, the second and third protrusions present chamfered edges. With such an arrangement, the second and third protrusions and/or the bus bar are able to compensate a small displacement of the piston to ensure the second and third protrusions engage the aperture. In other words, this feature permits to bring back the piston and/or the bus bar on the right track in the event of a small displacement of the piston during its move from the first to the second position. Thus, the reliability of the pyrotechnic circuit breaker is still further improved.

According to an embodiment, one of the piston and the body comprises at least one slit, and the other of the piston and the body comprises at least one corresponding rib, the slit and the corresponding rib being configured to cooperate when the piston is in the first position. With such an arrangement, in the pyrotechnic circuit breaker according to the invention, the piston can also be guided as soon as it starts moving, thus further improving the reliability of the pyrotechnic circuit breaker. Moreover, if the size of the slit and the rib in the first direction is greater than the distance (if any) separating the second protrusion from the bus bar in the first position, the piston will always be guided from the first position until the cutting edge cuts the bus bar. Further, if the pyrotechnic circuit breaker also comprises a drawer as described above, the piston can be guided all the way from the first position to the second position, and prevent any rotation of the piston at any stages of its displacement.

Another object of the invention is to provide a protected electrical circuit comprising:
- a protected power supply system, and
- an electric device powered by said protected power supply system,
wherein said protected power supply system comprises:
- a pyrotechnic circuit breaker as previously disclosed,
- a power supply circuit connected to both ends of the bus bar of the pyrotechnic circuit breaker, and
- a control device adapted to activate the pyrotechnic igniter of the pyrotechnic circuit breaker when an electrical current in the power supply system reaches a predetermined threshold.

Still another object of the invention is to provide a device comprising a protected electrical circuit as described above, the device being one of the following: a car, a windmill, a solar power supply unit, a mobile vehicle power supply unit.

### PRESENTATION OF THE DRAWINGS

Other features, aims and advantages of the invention will be detailed in the following description, which is purely illustrative and should not be interpreted in a limiting way, and which should be read in view of the enclosed drawings, wherein:
- Figs. 1A and 1B are respectively a lower and an upper exploded views of a pyrotechnic circuit breaker according to an embodiment of the invention;
- Figs. 2A to 2C are cross section-views of the pyrotechnic circuit breaker of Figs. 1A and 1B along a plane II containing axis Z and axis X, respectively when the piston is in the first position, in an intermediate position and in the second position;
- Figs. 3A to 3C are cross section-views of the pyrotechnic circuit breaker of Figs. 1A and 1B along a plane III parallel to plane II and centered on a second protrusion of the piston, respectively when the piston is in the first position, in an intermediate position and in the second position; and
- Figure 4 is a schematic view of a protected electrical circuit according to an embodiment of the invention.

### DETAILED DESCRIPTION

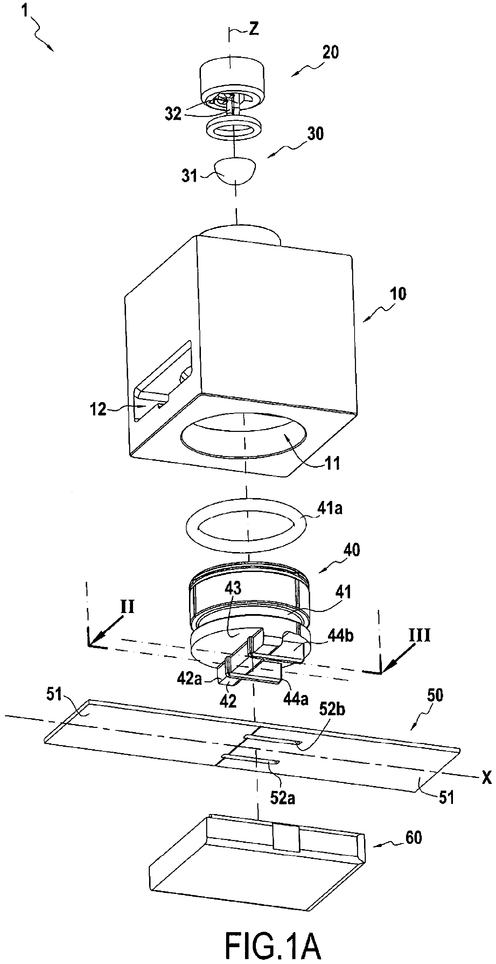

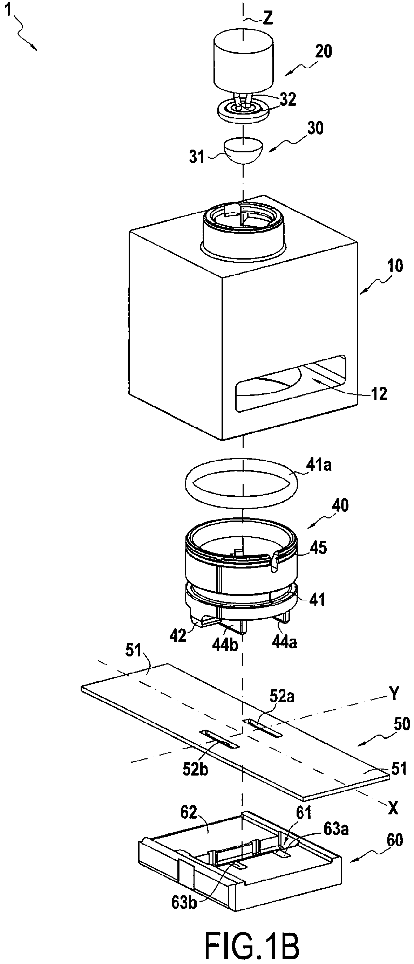

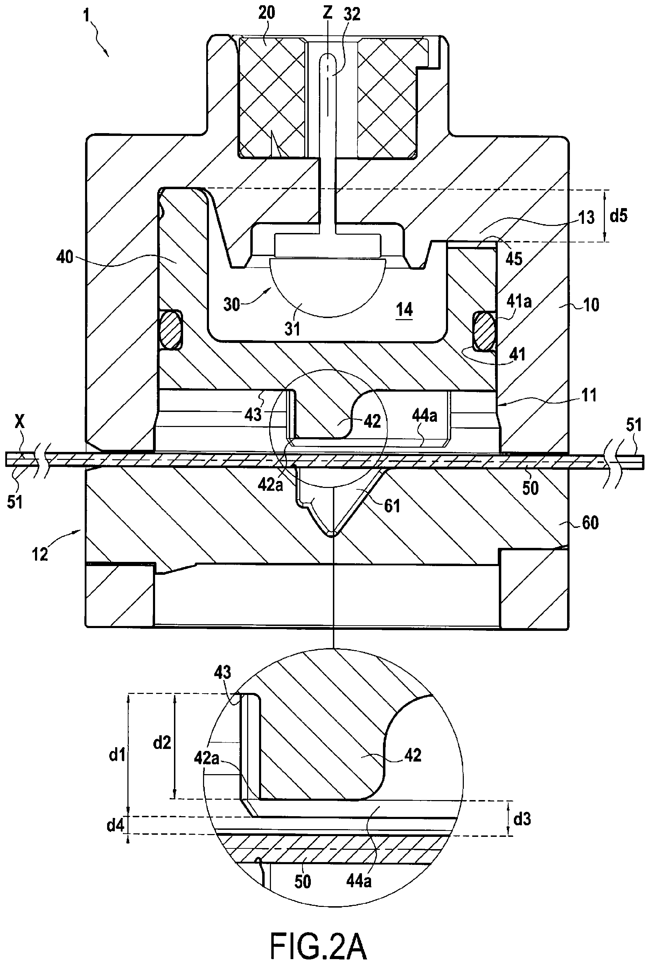

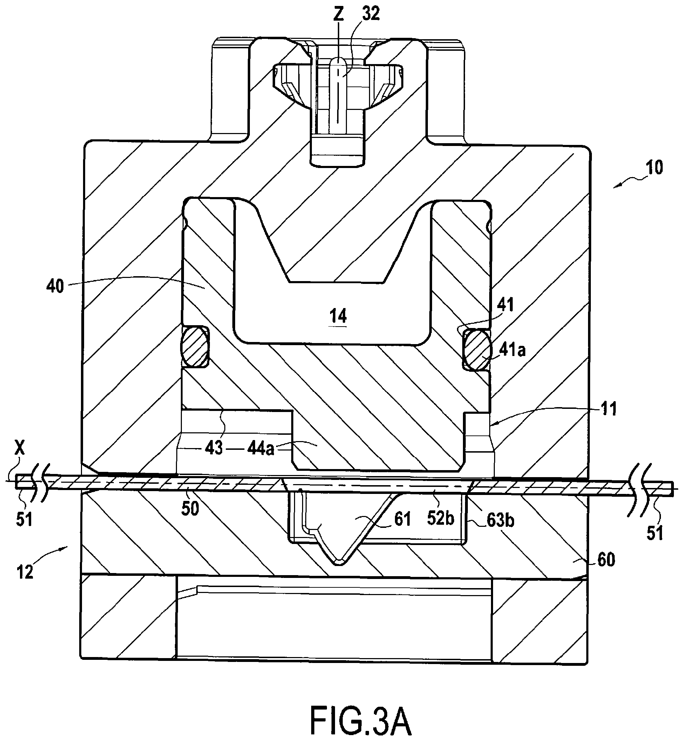

Figs. 1A and 1B illustrate different exploded views a pyrotechnic circuit breaker 1 according to an embodiment of the present invention. Figs. 2A and 3A illustrate cross-section views, respectively along planes II and III (Figure 1A) of the pyrotechnic circuit breaker 1. The pyrotechnic circuit breaker 1 illustrated in the figures comprises: a body 10, a retainer 20, an igniter 30, a piston 40, an electrically conductive bus bar 50, and a drawer 60.

The body 10 is adapted to accommodate the igniter 30 and the piston 40 within an inner volume or internal cavity 11. The internal cavity 11 presents, in the embodiment shown, a cylindrical shape, however, the cavity 11 can present other shapes. The retainer 20 is typically positioned within a recess made in an outer surface of the body 10 and is adapted to retain the igniter 30 inside the body 10.

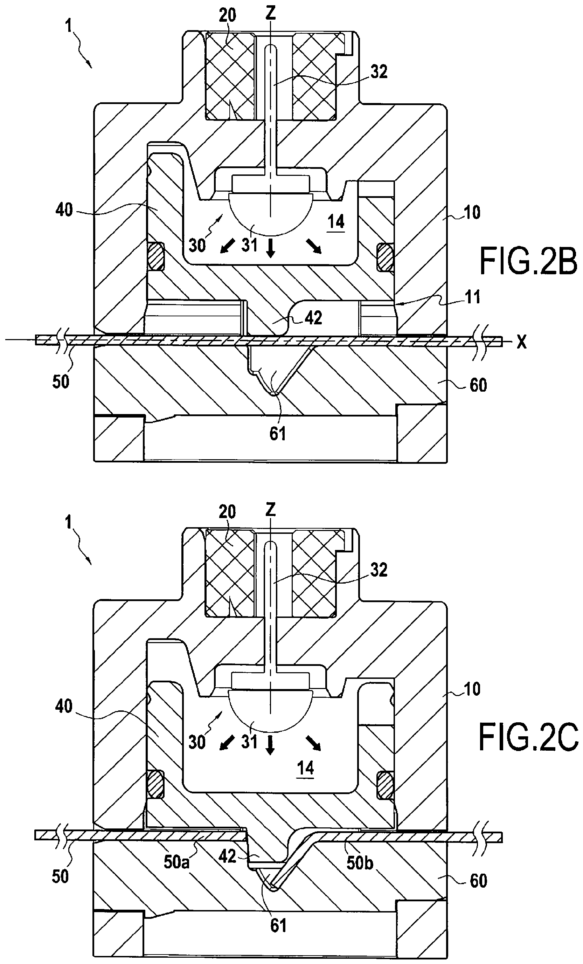

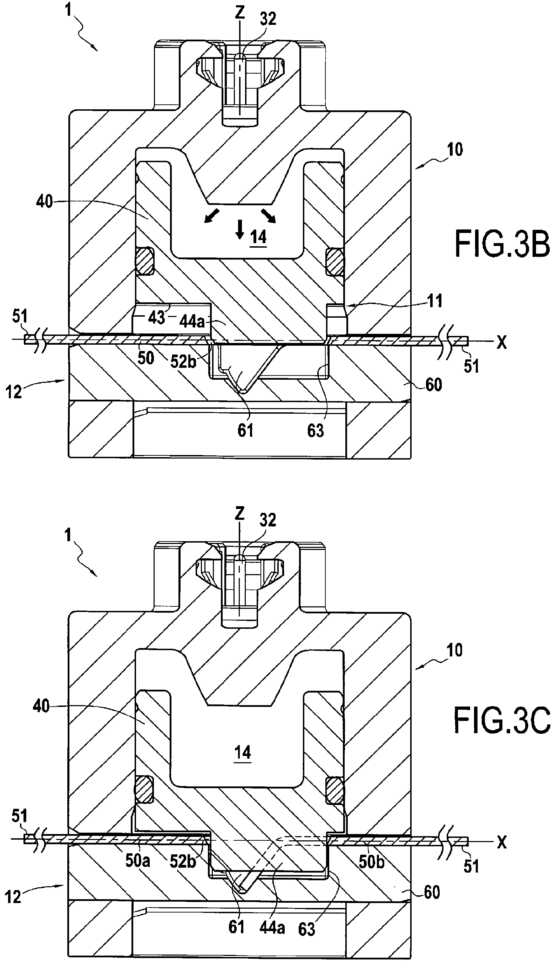

The piston 40 has, in this example, a cylindrical shape centered on a longitudinal axis Z (first direction), represented on the drawings. The piston 40 also comprises a circumferential groove 41 in which a sealing gasket 41a, e.g. an O-ring, is maintained. The piston 40 can move along the longitudinal axis Z, between a raised position (first position), as shown in Figs. 2A and 3A, and a lowered position (second position), as shown in Figs. 2C and 3C. As long as the igniter 30 has not been used, i.e. activated, the piston 40 remains in its raised position. It should be noted that the piston 40 may have other shapes, depending on the shape of the internal cavity 11 and the intended purposes of the pyrotechnic circuit breaker 1.

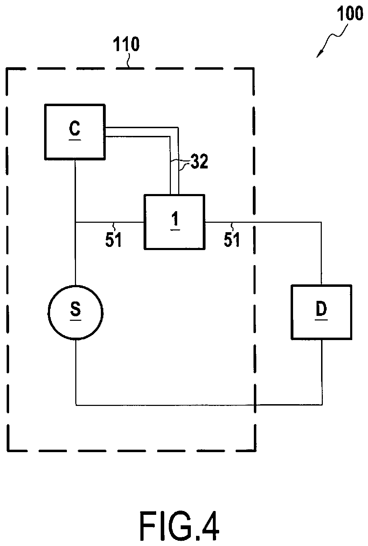

In the embodiment shown, the igniter 30 comprises a pyrotechnic charge 31 acting as a gas generator, and conductive pins 32 adapted to be connected for example to a control device C (Fig. 4). The conductive pins 32 may be adapted to fire the pyrotechnic charge 31 in response to a predetermined activation signal. Upon its activation, the igniter 30 is configured to drive the piston 40 from its raised position to its lowered position, where it separates the bus bar 50 into two distinct portions 50a and 50b (Figs. 2C and 3C), in order to break the electrical conduction of the bus bar 50.

The body 10 comprises a slot 12 that extends through it, along an axis X (second direction) transverse to the axis Z. This slot 11 is adapted so that a drawer 60 and the bus bar 50 can be housed in the body 10. The drawer 60 supports the bus bar 50 and is adapted to be slidably inserted in the slot 12. The bus bar 50 can also be slidably inserted through the body 10 on the drawer 60, so as to protrude from two opposite sides of the body 10 in order to establish electric conduction through the body 10 by connecting an electric circuit to both ends 51 of the bus bar 50 (Fig. 4).

To achieve the cut of the bus bar 50, the piston 40 comprises a first protrusion 42 having a cutting edge 42a, protruding from a lower face 43 thereof, and adapted to come into contact with the bus bar 50, in order to cut or break the bus bar 50 along a direction given by an axis Y perpendicular to the direction given by axis Z along which the piston 40 is adapted to slide. In this example, the direction given by axis Y is also perpendicular to the direction given by axis X. In this example, the first protrusion 42 also extends in the direction given by axis Y and has a length in said direction Y that is substantially equal to the width (i.e. diameter) of the piston 40 in the same direction; in other words, the first protrusion 42 extends on all the width of the piston 40 in said direction Y.

It should be noted that, in the present text, the term "direction Z" (respectively X and Y) designates a direction given by axis Z.

According to the present invention, the piston 40 comprises a second protrusion 44a extending from the lower face 43 thereof. In the embodiment shown, the piston 40 also comprises a third protrusion 44b similar to the second protrusion 44a. Both protrusions 44a and 44b extend from the lower face 43 over a distance d1 (Fig. 2A). The first protrusion 42 extends from the lower face 43 over a distance d2 that is lower than distance d1, and different from distance d1. Said differently, when the piston 40 is in the first position or raised position, the first protrusion 42 is separated from the bus bar 50 by a distance d3 that is greater than the distance d4 (if any) separating the second and third protrusions 44a and 44b from the bus bar 50. In the embodiment shown, the piston is made of an insulating material. Likewise, the first and second protrusions 44a and 44b

Still according to the present invention, the bus bar 50 comprises two apertures 52a and 52b. The apertures 52a and 52b are respectively aligned along the direction Z with the protrusions 44a and 44b. In this example, both apertures 52a and 52b present substantially the same shape as the protrusions 44a and 44b so they can cooperate when the piston moves from the first position (Figs. 2A and 3A) to the second position (Figs. 2C and 3C). In other embodiments not shown, the apertures and the second and third protrusions have different but cooperating shapes; that is, the second and third protrusions are adapted to engage the apertures when the piston moves from the first position to the second position.

It should be observed that, in this example, the distance d4 cannot be equal to zero because it would otherwise be impossible to slide the bus bar 50 inside the body 10 to assemble the circuit breaker 1. However, in other embodiments not shown, said distance d4 may be zero, or the protrusions 44a and 44b may even be already engaged in the apertures 52a and 52b when the piston 40 is in the raised position. On the contrary, distance d3 separating the first protrusion 42 from the bus bar 50 should be greater than zero and not equal to zero, in order to ensure a proper cutting of the bus bar 50.

In the embodiment shown in the figures, the second and third protrusions 44a and 44b, and the apertures 52a and 52b, have an elongated shape in the direction X, that is, in the same direction the bus bar 50 extends, and in a direction perpendicular to axis Y and the first protrusion 42. Such an arrangement is advantageous to reduce the impact of the apertures on the electrical conductivity of the bus bar 50. Such shapes are still advantageous to reduce the rotation of the piston 40 when it cuts the bus bar 50. In the embodiment shown, the second and third protrusions 44a and 44b extend in the direction X over a distance that is greater than a third of the width (i.e. the diameter) of the piston 50 in a direction perpendicular to axis Z, and strictly lower than said width.

In the embodiment shown, the second and third protrusions 44a and 44b present chamfered edges. That is, the protrusions 44a and 44b are narrower at their ends facing the bus bar 50 than at their base on the lower face 43 of the piston 40. In addition, the apertures 52a and 52b may also present chamfered edges on their edges facing the piston 50. Said differently, the apertures 52a and 52b may be larger on their side facing the piston 40 than on the opposite side. With such arrangements, the pyrotechnic circuit breaker 1 can accommodate a small mispositioning of the piston 40 in the cavity 11 of the body 10 and still work as intended.

According to the embodiment shown in the figures, the drawer 60 comprises a receiving groove 61 on its face 62 supporting the bus bar 50 which extends in a direction parallel to axis Y. The groove 61 is configured to receive the cut or broken portions of the bus bar 50, and to allow the movement of the first protrusion 42 of the piston 40 through the bus bar 50. The receiving groove 61 has a triangular or globally triangular section. Upon its movement from the raised position to the lowered position, the first protrusion 42 of the piston 140 with its cutting edge 42a, comes into contact with a surface of the receiving groove 61. This continuous contact between the first protrusion 42 and the receiving groove 61 enables to isolate the two portions 50a and 50b of the bus bar 50 from each other once it has been cut, and thereby improves the electrical insulation between the two portions 50a and 50b of the bus bar 50 for reliably breaking the associated circuit. Such an arrangement also prevents arching. With such an arrangement, the receiving groove 61 and the cutting edge 42a of the first protrusion 42 cooperate to form scissors in order to cut the bus bar 50.

The drawer 60 may further comprise, as shown in Fig. 1B and Figs. 3A to 3C, two slots 63a and 63b aligned in direction Z with the second and third protrusions 44a and 44b of the piston 40. Said slots 63a and 63b are also aligned in direction Z with the apertures 52a and 52b in the bus bar 50. Thus, when the piston 40 reaches its lowered position (Figs. 2C and 3C), the second and third protrusions 44a and 44b are engaged in the slots 63a and 63b to prevent further movement of the piston 40. It also permits to continue guiding the piston 40 after the bus bar 60 is cut.

Typically, as shown in Fig. 1B, the piston 40 further comprises a slit 45 (Figs. 1B to 2C) formed in an upper part of the piston 40, and an upper wall of the body is provided with a corresponding rib 13 (Figs. 2A to 2C). The rib 13 is adapted to engage in the slit 45 when the piston 40 is in the first or raised position. The rib 13 and the slit 45 form indexing means for indexing the angular position of the piston 40 within the cavity 11. They also form a guide to prevent the piston 40 from rotating around axis Z when the piston 40 starts leaving its raised position upon activation of the igniter 30. Of course, the position of the slit 45 and the rib 13 may be inverted between the piston 40 and the body 10. Advantageously, the rib 13 may extend from the body over a distance d5 (Fig. 2A) that is greater than or equal to the distance d4 separating the second and third protrusions 44a and 44b from the bus bar 50. Witch such an arrangement, the piston 40 may be guided all the way from its raised position until its lowered position.

The functioning of the pyrotechnic circuit breaker 1 will be briefly described with reference to Figs. 2A to 3C. It should be understood that the pyrotechnic circuit breaker 1 is in the same state between Figs. 2A and 3A, between Figs. 2B and 3B, and between Figs. 2C and 3C.

At Figs. 2A and 3A, the piston 40 of the pyrotechnic circuit breaker 1 is in a first position or raised position, corresponding to a storage or transport configuration of the device. In this configuration, the igniter 30 has not yet been activated.

Then, in response to an activation signal, e.g. coming from a control device C, the igniter 30 is activated and lights the pyrotechnic charge 31 so that gas is generated in a pressurization chamber 14 of the pyrotechnic circuit breaker 1. As shown in Figs. 2B and 3B, the pressure inside de pressurization chamber has increased and the piston 40 starts moving to leave the raised position. As illustrated therein, the second and third protrusions 44a and 44b engages the apertures 52a and 52b in the bus bar 50 before the first protrusion 42 and the cutting edge 42a thereof starts cutting the bus bar 50.

Finally, the first protrusion 42 comes into contact with the bus bar 50, and effectively cuts the bus bar into two portions 50a and 50b, as shown in Figs. 2C and 3C. While the bus bar 50 is being cut, the second and third protrusions 44a and 44b go through the bus bar 50 and start engaging the slots 63a and 63b in the drawer 60. In the end, the two portions 50a and 50b of the bus bar 50 are well separated.

Fig. 4 shows a protected electrical circuit 100 according to an embodiment of the present invention. The circuit 100 comprises a protected power supply system 110 having a power supply circuit S connected to the ends 51 of the bus bar 50 of the pyrotechnic circuit breaker 1 and a control device C connected to the power supply circuit S and to the conductive pins 32 of the pyrotechnic circuit breaker 1, and an electric device D powered by the power supply system 2.

The control device C may be adapted to activate the pyrotechnic circuit breaker 100 by sending an appropriate signal in response to a failure in the power supply system 110. For example, the control device C may be configured to activate the pyrotechnic circuit breaker 1 when an electrical current in the power supply circuit 2 reaches a predetermined threshold. Of course, the control device C may be configured to react to other failure indicators, for example an abnormal temperature in the electric device D.

A protected electrical circuit 100 according to the invention may be suitable for a device like a car, a windmill, a solar power unit, a mobile vehicle power supply unit, and the like.

## Claims

1. A circuit breaker (1) comprising:
a body (10),
a piston (40) slidably mounted in said body along a first direction (Z), said piston having a first protrusion (42) extending from a lower face (43) thereof comprising a cutting edge (42a),
an electrically conductive bus bar (50) extending in a second direction (X) transverse to the first direction,
wherein the piston is adapted to move from a first position corresponding to a raised position to a second position corresponding to a lowered position in order to cut the bus bar into two distinct portions (50a, 50b),
wherein the piston further comprises a second protrusion (44a) extending from the lower face (43) of the piston over a greater distance (d1) than the first protrusion (d2), and in that the bus bar (50) comprises an aperture (52a) aligned along the first direction (Z) with said second protrusion (44a), the second protrusion and the aperture being adapted to cooperate such that the second protrusion is engaged in the aperture when the piston moves from the first position to the second position,
**characterized in that** the circuit breaker is a pyrotechnic circuit breaker and comprises a pyrotechnic igniter (30) adapted to propel said piston and to move it upon activation from the first position to the second position, and **in that** the piston further comprises a third protrusion (44b) extending from the lower face thereof and the bus bar comprises two apertures (52a, 52b) adapted to cooperate with the second and third protrusions of the piston.

2. The pyrotechnic circuit breaker of claim 1, further comprising a drawer (60) supporting the bus bar and comprising two slots (63a, 63b) aligned along the first direction (Z) with the apertures (52a, 52b) in the bus bar (50), the second and third protrusions being engaged in said slots when the piston is in the second position.

3. The pyrotechnic circuit breaker of claim 2, wherein the drawer (60) further comprises a receiving groove (61) on a face (62) of the drawer supporting the bus bar (50), said receiving groove being configured to cooperate with the first protrusion (42) of the piston and to receive one of the distinct portions (50b) of the bus bar once it is cut.

4. The pyrotechnic circuit breaker of any one of claims 1 to 3, wherein the second and third protrusions (44a, 44b) and the apertures (52a, 52b) in the bus bar (50) have an elongated shape in the second direction (X).

5. The pyrotechnic circuit breaker of any one of claims 1 to 4, wherein the apertures (52a, 52b) in the bus bar present chamfered edges.

6. The pyrotechnic circuit breaker of any one of claims 1 to 5, wherein the second and third protrusions (44a, 44b) present chamfered edges.

7. The pyrotechnic circuit breaker of any one of claims 1 to 6, wherein one of the piston (40) and the body (10) comprises at least one slit (45), and the other of the piston and the body comprises at least one corresponding rib (13), the slit and the corresponding rib being configured to cooperate when the piston is in the first position.

8. A protected electrical circuit (100) comprising:
a protected power supply system (110), and
an electric device (D) powered by said power supply system,
wherein said protected power supply system comprises:
a pyrotechnic circuit breaker (1) of any one of claims 1 to 7,
a power supply circuit (S) connected to both ends (51) of the bus bar (50) of the pyrotechnic circuit breaker (1), and
a control device (C) adapted to activate the pyrotechnic igniter (30) of the pyrotechnic circuit breaker when an electrical current in the power supply system reaches a predetermined threshold.

9. A device comprising a protected electrical circuit (100) according to claim 8, the device being one of the following: a car, a windmill, a solar power supply unit, a mobile vehicle power supply unit.

## Patentansprüche

1. Leistungsschalter (1), der Folgendes umfasst:
einen Körper (10),
einen Kolben (40), der gleitbar in dem Körper entlang einer ersten Richtung (Z) montiert ist, wobei der Kolben einen ersten Vorsprung (42) aufweist, der sich von einer unteren Seite (43) davon erstreckt und eine Schneidkante (42a) umfasst,
eine elektrisch leitfähige Sammelschiene (50), die sich in eine zweite Richtung (X) quer zur ersten Richtung erstreckt,
wobei der Kolben angepasst ist, sich aus einer ersten Position, die einer angehobenen Position entspricht, zu einer zweiten Position, die einer abgesenkten Position entspricht, zu bewegen, um die Sammelschiene in zwei eindeutige Abschnitte (50a, 50b) zu schneiden,
wobei der Kolben ferner einen zweiten Vorsprung (44a) umfasst, der sich von der unteren Seite (43) des Kolbens über eine größere Distanz (d1) als der erste Vorsprung (d2) erstreckt, und darin, dass die Sammelschiene (50) eine Öffnung (52a) umfasst, die entlang der ersten Richtung (Z) auf den zweiten Vorsprung (44a) ausgerichtet ist, wobei der zweite Vorsprung und die Öffnung angepasst sind zusammenzuwirken, derart, dass der zweite Vorsprung in die Öffnung eingreift, wenn sich der Kolben aus der ersten Position zur zweiten Position bewegt,
**dadurch gekennzeichnet, dass** der Leistungsschalter ein pyrotechnischer Leistungsschalter ist und einen pyrotechnischen Zünder (30) umfasst, der angepasst ist, den Kolben anzutreiben und ihn nach Aktivierung aus der ersten Position in die zweite Position zu bewegen, und dadurch, dass der Kolben ferner einen dritten Vorsprung (44b) umfasst, der sich von der unteren Seite davon erstreckt, und die Sammelschiene zwei Öffnungen (52a, 52b) umfasst, die angepasst sind, mit dem zweiten und dem dritten Vorsprung des Kolbens zusammenzuwirken.

2. Pyrotechnischer Leistungsschalter nach Anspruch 1, der ferner eine Schublade (60) umfasst, die die Sammelschiene stützt und zwei Längslöcher (63a, 63b) umfasst, die entlang der ersten Richtung (Z) auf die Öffnungen (52a, 52b) in der Sammelschiene (50) ausgerichtet sind, wobei der zweite und der dritte Vorsprung mit den Längslöchern in Eingriff sind, wenn sich der Kolben in der zweiten Position befindet.

3. Pyrotechnischer Leistungsschalter nach Anspruch 2, wobei die Schublade (60) ferner eine Aufnahmenut (61) auf einer Seite (62) der Schublade, die die Sammelschiene (50) stützt, umfasst, wobei die Aufnahmenut dazu ausgelegt ist, mit dem ersten Vorsprung (42) des Kolbens zusammenzuwirken und einen der eindeutigen Abschnitte (50b) der Sammelschiene, nachdem er abgeschnitten ist, aufzunehmen.

4. Pyrotechnischer Leistungsschalter nach einem der Ansprüche 1 bis 3, wobei der zweite und der dritte Vorsprung (44a, 44b) und die Öffnungen (52a, 52b) in der Sammelschiene (50) eine längliche Form in der zweiten Richtung (X) aufweisen.

5. Pyrotechnischer Leistungsschalter nach einem der Ansprüche 1 bis 4, wobei die Öffnungen (52a, 52b) in der Sammelschiene abgeschrägte Kanten präsentieren.

6. Pyrotechnischer Leistungsschalter nach einem der Ansprüche 1 bis 5, wobei der zweite und der dritte Vorsprung (44a, 44b) abgeschrägte Kanten präsentieren.

7. Pyrotechnischer Leistungsschalter nach einem der Ansprüche 1 bis 6, wobei einer des Kolbens (40) und des Körpers (10) mindestens einen Schlitz (45) umfasst und der andere des Kolbens und des Körpers mindestens eine entsprechende Rippe (13) umfasst, wobei der Schlitz und die entsprechende Rippe dazu ausgelegt sind zusammenzuwirken, wenn sich der Kolben in der ersten Position befindet.

8. Geschützte elektrische Schaltung (100), die Folgendes umfasst:
ein geschütztes Energieversorgungssystem (110) und
eine elektrische Vorrichtung (D), die vom Energieversorgungssystem mit Energie versorgt wird, wobei das geschützte Energieversorgungssystem Folgendes umfasst:
einen pyrotechnischen Leistungsschalter (1) nach einem der Ansprüche 1 bis 7,
eine Energieversorgungsschaltung (S), die mit beiden Enden (51) der Sammelschienen (50) des pyrotechnischen Leistungsschalters (1) verbunden ist, und
eine Steuervorrichtung (C), die angepasst ist, den pyrotechnischen Zünder (30) des pyrotechnischen Leistungsschalters zu aktivieren, wenn ein elektrischer Strom im Energieversorgungssystem einen vorbestimmten Schwellwert erreicht.

9. Vorrichtung, die eine elektrische Schaltung (100) nach Anspruch 8 umfasst, wobei die Vorrichtung eines von Folgendem ist: ein Auto, eine Windmühle, eine Solarenergieversorgungseinheit, eine mobile Fahrzeugenergieversorgungseinheit.

## Revendications

1. Coupe-circuit (1) comprenant :
un corps (10),
un piston (40) monté, de manière coulissante, dans ledit corps le long d'une première direction (Z), ledit piston ayant un premier relief en saillie (42) s'étendant à partir de sa face inférieure (43) comprenant un bord de coupe (42a),
une barre électriquement conductrice (50) s'étendant dans une seconde direction (X) transversale par rapport à la première direction,
dans lequel le piston est adapté pour se déplacer d'une première position correspondant à une position haute à une seconde position correspondant à une position abaissée afin de couper la barre en deux parties distinctes (50a, 50b),
dans lequel le piston comprend en outre un deuxième relief en saillie (44a) s'étendant à partir de la face inférieure (43) du piston sur une plus grande distance (d1) que le premier relief en saillie (d2), et en ce que la barre (50) comprend une ouverture (52a) alignée le long de la première direction (Z) avec ledit deuxième relief en saillie (44a), le deuxième relief en saillie et l'ouverture étant adaptées pour coopérer de sorte que le deuxième relief en saillie est engagé dans l'ouverture lorsque le piston se déplace de la première position à la seconde position,
**caractérisé en ce que** le coupe-circuit est un coupe-circuit pyrotechnique et comprend un allumeur pyrotechnique (30) adapté pour mettre en mouvement ledit piston et le déplacer suite à son activation de la première position à la seconde position, et **en ce que** le piston comprend en outre un troisième relief en saillie (44b) s'étendant à partir de sa face inférieure et la barre comprenant deux ouvertures (52a, 52b) adaptées pour coopérer avec les deuxième et troisième reliefs en saillie du piston.

2. Coupe-circuit pyrotechnique selon la revendication 1, comprenant en outre un tiroir (60) supportant la barre et comprenant deux fentes (63a, 63b) alignées le long de la première direction (Z) avec les ouvertures (52a, 52b) dans la barre (50), les deuxième et troisième reliefs en saillie étant engagés dans lesdites fentes lorsque le piston est dans la seconde position.

3. Coupe-circuit pyrotechnique selon la revendication 2, dans lequel le tiroir (60) comprend en outre une rainure de réception (61) sur une face (62) du tiroir supportant la barre (50), ladite rainure de réception étant configurée pour coopérer avec le premier relief en saillie (42) du piston et pour recevoir l'une des parties distinctes (50b) de la barre une fois qu'elle est coupée.

4. Coupe-circuit pyrotechnique selon l'une quelconque des revendications 1 à 3, dans lequel les deuxième et troisième reliefs en saillie (44a, 44b) et les ouvertures (52a, 52b) dans la barre (50) ont une forme allongée dans la seconde direction (X).

5. Coupe-circuit pyrotechnique selon l'une quelconque des revendications 1 à 4, dans lequel les ouvertures (52a, 52b) dans la barre présentent des bords chanfreinés.

6. Coupe-circuit pyrotechnique selon l'une quelconque des revendications 1 à 5, dans lequel les deuxième et troisième reliefs en saillie (44a, 44b) présentent des bords chanfreinés.

7. Coupe-circuit pyrotechnique selon l'une quelconque des revendications 1 à 6, dans lequel l'un parmi le piston (40) et le corps (10) comprend au moins une fente (45) et l'autre parmi le piston et le corps comprend au moins une nervure (13) correspondante, la fente et la nervure correspondante étant configurées pour coopérer lorsque le piston est dans la première position.

8. Circuit électrique protégé (100) comprenant :
un système d'alimentation d'énergie protégé (110), et
un dispositif électrique (D) alimenté par ledit système d'alimentation d'énergie, dans lequel ledit système d'alimentation d'énergie protégé comprend :
un coupe-circuit pyrotechnique (1) selon l'une quelconque des revendications 1 à 7,
un circuit d'alimentation d'énergie (S) raccordé aux deux extrémités (51) de la barre (50) du coupe-circuit pyrotechnique (1), et
un dispositif de commande (C) adapté pour activer l'allumeur pyrotechnique (30) du coupe-circuit pyrotechnique lorsque le courant électrique dans le système d'alimentation d'énergie atteint un seuil prédéterminé.

9. Dispositif comprenant un circuit électrique protégé (100) selon la revendication 8, le dispositif étant l'un parmi les suivants : une voiture, une éolienne, une unité d'alimentation d'énergie solaire, une unité d'alimentation d'énergie pour véhicule mobile.
